# EUROPÄISCHE PATENTANMELDUNG

(11) **EP 0 671 585 A1**
(43) Veröffentlichungstag der Anmeldung: **13.09.1995**
(21) Anmeldenummer: 95103281.2
(22) Anmeldetag: 08.03.1995
(51) Int. Cl.: F22D 1/50, B01D 19/00

(54) **Verfahren und Vorrichtung zum Entgasen des Zusatzwassers eines Dampfturbinenprozesses**

(30) Priorität: 09.03.1994 DE 4407843
(71) Anmelder: BDAG Balcke-Dürr Aktiengesellschaft, D-40882 Ratingen (DE)
(72) Erfinder: Trage, Burkhard, Dipl.-Ing., D-40882 Ratingen (DE); Leitz, Richard, Dipl.-Ing., D-40721 Hilden (DE)
(74) Vertreter: Stenger, Watzke & Ring Patentanwälte

(57) **Zusammenfassung**

Die Erfindung betrifft ein Verfahren und eine Vorrichtung zum Entgasen des Zusatzwassers für den Wasser-Dampf-Kreislauf des Dampfturbinenprozesses eines Kraftwerkes. Um eine Entgasung des Zusatzwassers ohne Zufuhr arbeitsfähiger Energie zu erzielen, wird das Zusatzwasser in die Abdampfleitung (1) der Dampfturbine unter Ausbildung eines dünnen Flüssigkeitsfilmes engespeist. Die freigesetzten Gase werden über einen Anschluß der Abdampfleitung (1) im Bereich der Zusatzwasser-Einspeisung an eine Evakuierungseinrichtung abgezogen.

## Beschreibung

Die Erfindung betrifft ein Verfahren zum Entgasen des Zusatzwassers für den Wasser-Dampf-Kreislauf des Dampfturbinenprozesses eines Kraftwerkes sowie eine Vorrichtung zur Durchführung dieses Verfahrens.

Durch unvermeidbare Dampf- und Wasserverluste im Wasser-Dampf-Kreislauf eines Dampfturbinenprozesses ist es erforderlich, der Kreislaufmenge Zusatzwasser zuzuführen. Dieses Zusatzwasser muß vor seiner Einspeisung in den Wasser-Dampf-Kreislauf entgast werden. Hierfür sind bisher spezielle Entgaser vorgesehen, in denen das Zusatzwasser durch Zufuhr von Zusatzenergie, beispielsweise in Form von aus dem Prozeß abgezweigtem Dampf, zum Sieden gebracht wird und auf diese Weise die im Wasser gebundenen Gase ausgetrieben werden.

Der Erfindung liegt die **Aufgabe** zugrunde, die Zufuhr von Zusatzenergie für die Entgasung des Zusatzwassers zu vermeiden und damit den Wirkungsgrad des Gesamtprozesses zu erhöhen.

Die **Lösung** dieser Aufgabenstellung durch die Erfindung ist dadurch gekennzeichnet, daß das Zusatzwasser in die Abdampfleitung der Dampfturbine unter Ausbildung eines dünnen Flüssigkeitsfilmes eingespeist wird und daß die freigesetzten Gase über einen Anschluß der Abdampfleitung im Bereich der Zusatzwasser-Einspeisung an eine Evakuierungseinrichtung abgezogen werden.

Die Entgasung des Zusatzwassers erfolgt somit nicht mehr durch Aufheizung des Zusatzwassers bis auf den Siedepunkt infolge Zufuhr von arbeitsfähiger Energie, beispielsweise aus dem Dampfkreislauf, sondern erfindungsgemäß durch Ausbildung eines dünnen Wasserfilmes innerhalb der Abdampfleitung, der durch den in der Abdampfleitung strömenden Dampf aufgeheizt wird. Die im Zusatzwasser enthaltenen Gase werden zum größten Teil dadurch ausgetrieben, daß das Zusatzwasser der Abdampfleitung zugeführt wird, in der es nahezu auf die Siedetemperatur gebracht wird, ohne daß eine zusätzliche arbeitsfähige Energie zugeführt werden muß. Die Siedetemperatur des Zusatzwassers liegt wegen des in der Abdampfleitung herrschenden niedrigen Druckes auf geringem Niveau.

Mit dem erfindungsgemäßen Verfahren wird nicht nur die Zufuhr von zusätzlicher, beispielsweise dem Dampfkreislauf entzogener Energie für die Entgasung des Zusatzwassers in einer speziellen Entgasungsapparatur vermieden, sondern weiterhin der Vorteil erzielt, daß die im Abdampf enthaltene, durch den Einsatz der Kondensationsanlage in die Atmosphäre abzuleitende Energie dadurch verringert wird, daß der Abdampf zur Erwärmung und damit zur Entgasung des Zusatzwassers genutzt wird. Hierbei wird das Zusatzwasser gleichzeitig auf Kondensattemperatur gebracht, so daß auch für diese Aufheizung des Zusatzwassers der Einsatz von zusätzlicher Energie vermieden wird, die beim erfindungsgemäßen Verfahren als arbeitsfähige Energie zur Erhöhung des Gesamtwirkungsgrades eingesetzt wird. Durch die Einspeisung des Zusatzwassers in die Abdampfleitung entfallen die bisher notwendigen Entgaser. Da die vorhandene Evakuierungseinrichtung für den Abzug der in der Abdampfleitung aus dem Zusatzwasser austretenden Gase verwendet wird, entfällt schließlich auch der Einsatz eines zusätzlichen Vakuumerzeugers.

Gemäß einem weiteren Merkmal der Erfindung kann das Zusatzwasser vor der Einspeisung in den Abdampfstrom vorgewärmt werden. Diese Vorwärmung kann durch Fremdenergie oder vorzugsweise durch den vor der Einspeisung des Zusatzwassers in der Abdampfleitung strömenden Dampf erfolgen.

Gemäß einem weiteren Merkmal der Erfindung wird die Abdampfleitung im Bereich der Zusatzwasser-Einspeisung an die Evakuierungseinrichtung der Kondensationsanlage angeschlossen, und zwar bei einer bevorzugten Ausführungsform der Erfindung an die Zuführungsleitung der dephlegmatorisch geschalteten Elemente der Kondensationsanlage. Hierdurch ergibt sich der Vorteil, daß aus der Abdampfleitung mit den aus dem Zusatzwasser abgezogenen Gasen abgesaugter Dampf in den dephlegmatorisch geschalteten Elementen kondensiert wird. Damit entfällt eine Belastung der Evakuierungseinrichtung durch mitgeschleppten Dampf. Weiterhin ergibt sich der Vorteil, daß der Vakuumerzeuger auf seiner Saugseite nur an ein Druckniveau angeschlossen ist.

Die Vorrichtung zur Durchführung des erfindungsgemäßen Verfahrens ist dadurch gekennzeichnet, daß in der Abdampfleitung eine Überlaufrinne mit angeschlossenem Ablaufblech angeordnet ist, das zusammen mit der Überlaufrinne, der Innenwand der Abdampfleitung und zusätzlichen Abschlußblechen einen geschlossenen Raum bildet, der nur im Bereich der Ablaufkante des Ablaufbleches zum Innern der Abdampfleitung offen ist. Diese erfindungsgemäße Ausbildung ergibt mit geringem konstruktiven und apparativen Aufwand eine zuverlässige und energiesparende Entgasung des Zusatzwassers.

Bei einer bevorzugten Ausführungsform der Erfindung ist oberhalb der Ablaufrinne eine Absaugleitung angeordnet, die mit der Zuführungsleitung der dephlegmatorisch geschalteten Elementen der Kondensationsanlage unterhalb der Dephlegmatoren verbunden ist.

Um die Ausbildung eines dünnen Flüssigkeitsfilmes zu gewährleisten, wird mit der Erfindung schließlich vorgeschlagen, die Überlaufrinne justierbar in der Abdampfleitung aufzuhängen, so daß die Überlaufrinne nach ihrer Montage mit ihrer Überlaufkante exakt horizontal ausgerichtet werden kann.

Die Zufuhrleitung für das Zusatzwasser kann erfindungsgemäß in der Abdampfleitung verlegt sein und ist vorzugsweise berippt.

Auf der Zeichnung ist ein Ausführungsbeispiel der erfindungsgemäßen Vorrichtung dargestellt, und zwar zeigen:
- Fig. 1: einen Querschnitt durch die Abdampfleitung eines Kraftwerkes im Bereich der Zusatzwasser-Einspeisung, die in der linken Hälfte im Schnitt und in der rechten Hälfte in einer Stirnansicht dargestellt ist, und
- Fig. 2: eine vergrößerte Schnittdarstellung der linken Überlaufrinne mit anschließendem Ablaufblech gemäß Fig. 1.

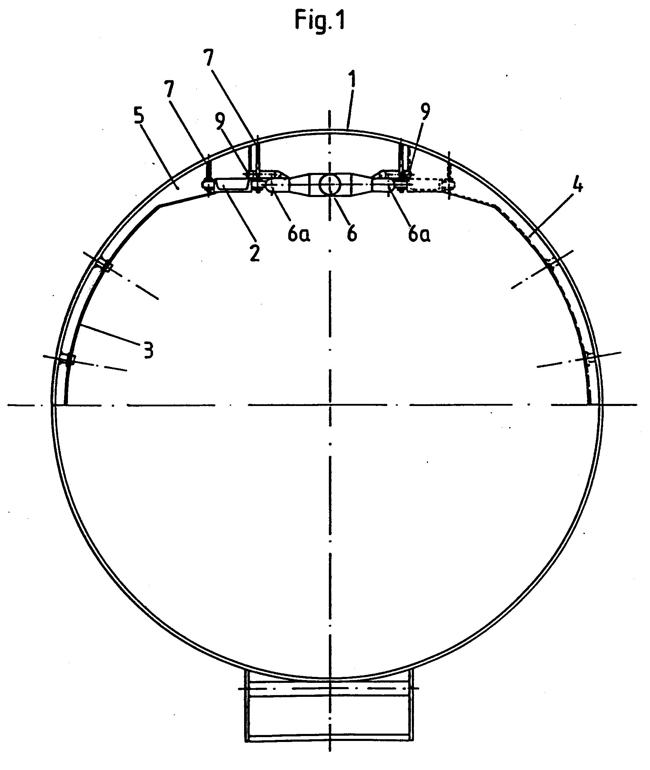

Die in Fig. 1 in einem Querschnitt dargestellte, von einer Dampfturbine zu einer luftgekühlten Direktkondensationsanlage führende Abdampfleitung 1 ist beim dargestellten Ausführungsbeispiel im oberen Bereich mit zwei waagerecht verlaufenden Überlaufrinnen 2 versehen, an die sich jeweils ein Ablaufblech 3 anschließt. Beim Ausführungsbeispiel hat jedes Ablaufblech 3 die Form eines Kreiszylinderabschnittes, der über einen Bogen von etwa 50° verläuft und über ein schräg verlaufendes ebenes Verbindungsstück an die jeweils außenliegende Unterseite einer Überlaufrinne 2 angeschlossen ist.

An die in einer senkrechten Ebene verlaufenden Ränder der Ablaufbleche 3 ist jeweils ein Abschlußblech 4 angeschlossen, so daß die Ablaufbleche 3 mit den Abschlußblechen 4 und der Innenwand der Abdampfleitung 1 einen geschlossenen Raum 5 bilden, der lediglich im Bereich der Ablaufkante jedes Ablaufbleches 3 nach unten offen ist.

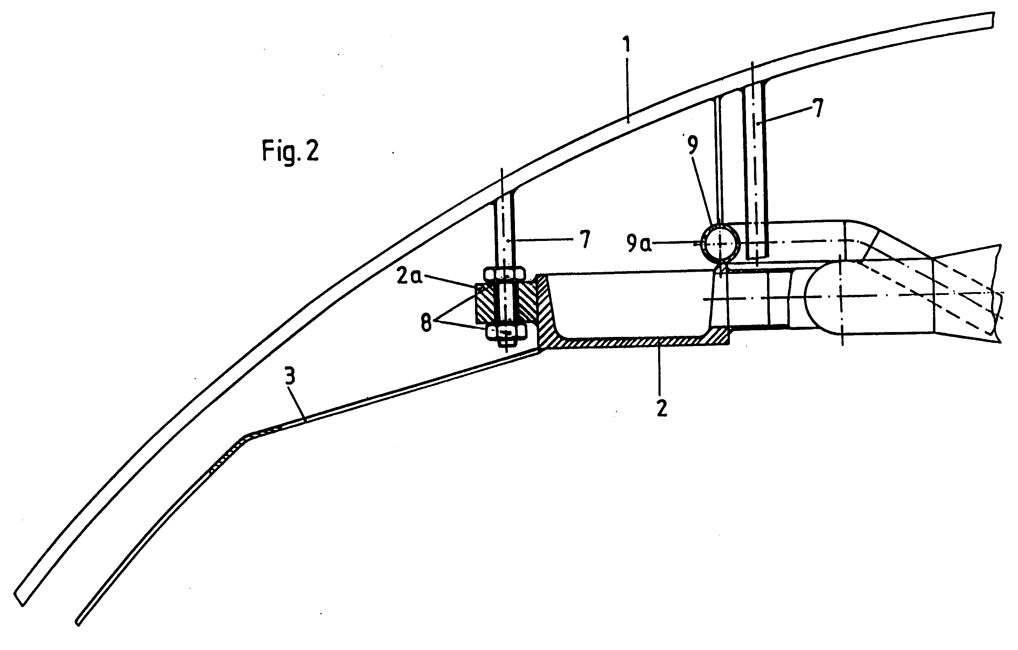

Den Überlaufrinnen 2 wird das dem Wasser-Dampf-Kreislauf zuzuführende Zusatzwasser über eine Zufuhrleitung 6 zugeführt, die etwa waagerecht im oberen Teil der Abdampfleitung 1 verläuft und über Zweigleitungen 6a an jede Überlaufrinne 2 angeschlossen ist, wie dies deutlich aus Fig. 2 hervorgeht. Jede Überlaufrinne 2 besteht aus einem U-Profil, dessen außenliegender Schenkel bearbeitet ist, um das Zusatzwasser als dünnen Flüssigkeitsfilm aus der Überlaufrinne 2 austreten zu lassen und auf das darunter liegende Ablaufblech 3 zu führen.

Um eine exakte horizontale Ausrichtung der Überlaufrinne 2 zu ermöglichen, ist diese justierbar aufgehängt. Beim Ausführungsbeispiel sind zu diesem Zweck an der Innenseite der Abdampfleitung 1 Gewindebolzen 7 angeordnet, auf denen die mit Tragflanschen 2a versehene Überlaufrinne 2 in der Höhe durch Muttern 8 justierbar angeordnet ist.

Auf dem jeweils innenliegenden Schenkel jeder Überlaufrinne 2 ist eine mit Absaugöffnungen 9a versehene Saugleitung 9 befestigt, die vorzugsweise an die nicht dargestellten Zufuhrleitungen der dephlegmatorisch geschalteten Elemente der Kondensationsanlage angeschlossen ist.

Das durch die Zufuhrleitung 6 und die Zweigleitungen 6a den Überlaufrinnen 2 zugeführte Zusatzwasser tritt als dünner Flüssigkeitsfilm aus der jeweiligen Überlaufrinne 2 aus und gelangt auf die Oberseite des darunter befindlichen Ablaufbleches 3. Der auf den Ablaufblechen 3 ablaufende laminare Rieselfilm hat eine Filmdicke zwischen 0,5 und 1 mm. Durch die Abschlußbleche 4 wird verhindert, daß in der Abdampfleitung 1 strömender Dampf den dünnen Flüssigkeitsfilm aufreißt oder anderweitig zerstört. Der Flüssigkeitsfilm gelangt auf diese Weise an die untenliegende Ablaufkante des jeweiligen Ablaufbleches 3. An dieser Stelle tritt der Flüssigkeitsfilm in den Bereich der Dampfströmung ein. Hierdurch wird der Flüssigkeitsfilm zu einem Teil durch Schubspannungskräfte aufgerissen und in Form von Tröpfchen mitgerissen. Zum anderen Teil wird der Flüssigkeitsfilm an der Innenwand der Abdampfleitung 1 ablaufen, so daß sich das Kondensat am Boden der Abdampfleitung 1 sammelt, von wo es dem Wasser-Dampf-Kreislauf zugeführt wird.

Durch die Einspeisung des Zusatzwassers in die Abdampfleitung, in der ein sehr niedriger Druck herrscht, und durch die Aufwärmung des Flüssigkeitsfilms durch das vom Abdampf beheizte Ablaufblech 3 sowie gegebenenfalls durch die Aufwärmung des Zusatzwassers, vorzugsweise in der Zufuhrleitung innerhalb der Abdampfleitung 1 gelangt das Zusatzwasser schnell auf Sättigungstemperatur, so daß die im Zusatzwasser enthaltenen Gase austreten. Diese Gase werden im oberen Teil des durch die Ablaufbleche 3, die Abschlußbleche 4 und die Innenwand der Abdampfleitung 1 gebildeten Raumes 5 durch die dort angeordneten Saugleitungen 9 abgezogen, so daß sie auf kürzestmöglichem Weg aus der Abdampfleitung 1 abgeführt werden. Sofern die Saugleitungen 9 mit den Zuführungsleitungen von dephlegmatorisch geschalteten Elementen der Kondensationsanlage verbunden sind, wird gegebenenfalls mit den Gasen abgesaugter Dampf in den dephlegmatorisch geschalteten Wärmetauscherelementen kondensiert. Außerdem ergibt sich der Vorteil, daß der vorhandene, auch zur Absaugung der Gase aus dem Zusatzwasser verwendete Vakuumerzeuger auf seiner Saugseite nur an ein Druckniveau angeschlossen ist.

### Bezugszeichenliste

- 1: Abdampfleitung
- 2: Überlaufrinne
- 2a: Tragflansch
- 3: Ablaufblech
- 4: Abschlußblech
- 5: Raum
- 6: Zufuhrleitung
- 6a: Zweigleitung
- 7: Gewindebolzen
- 8: Mutter
- 9: Saugleitung
- 9a: Absaugöffnung

## Patentansprüche

1. Verfahren zum Entgasen des Zusatzwassers für den Wasser-Dampf-Kreislauf des Dampfturbinenprozesses eines Kraftwerkes,
**dadurch gekennzeichnet,**
daß das Zusatzwasser in die Abdampfleitung (1) der Dampfturbine unter Ausbildung eines dünnen Flüssigkeitsfilmes eingespeist wird und daß die freigesetzten Gase über einen Anschluß der Abdampfleitung (1) im Bereich der Zusatzwasser-Einspeisung an eine Evakuierungseinrichtung abgezogen werden.

2. Verfahren nach Anspruch 1, dadurch gekennzeichnet, daß das Zusatzwasser vor der Einspeisung in den Abdampfstrom vorgewärmt wird.

3. Verfahren nach Anspruch 1 und 2, dadurch gekennzeichnet, daß das Zusatzwasser durch den vor der Einspeisung des Zusatzwassers in der Abdampfleitung (1) strömenden Dampf vorgewärmt wird.

4. Verfahren nach mindestens einem der Ansprüche 1,dadurch gekennzeichnet, daß die Abdampfleitung (1) im Bereich der Zusatzwasser-Einspeisung an die Evakuierungseinrichtung einer luftgekühlten Kondensationsanlage angeschlossen wird.

5. Verfahren nach Anspruch 4, dadurch gekennzeichnet, daß die Abdampfleitung (1) im Bereich der Zusatzwasser-Einspeisung an die Zuführungsleitungen von dephlegmatorisch geschalteten Elementen der Kondensationsanlage angeschlossen wird.

6. Vorrichtung zur Durchführung des Verfahrens nach mindestens einem der Ansprüche 1 bis 5, dadurch gekennzeichnet, daß in der Abdampfleitung (1) mindestens eine Überlaufrinne (2) mit angeschlossenem Ablaufblech (3) angeordnet ist, das zusammen mit der Überlaufrinne (2), der Innenwand der Abdampfleitung (1) und zusätzlichen Abschlußblechen (4) an den Stirnseiten einen geschlossenen Raum (5) bildet, der nur im Bereich der Ablaufkante des Ablaufbleches (3) zum Inneren der Abdampfleitung (1) offen ist.

7. Vorrichtung nach Anspruch 6, dadurch gekennzeichnet, daß oberhalb der Überlaufrinne (2) eine Saugleitung (9) für die abzusaugenden Gase angeordnet ist.

8. Vorrichtung nach Anspruch 6 oder 7, dadurch gekennzeichnet, daß die Überlaufrinne (2) justierbar aufgehängt ist.

9. Vorrichtung nach mindestens einen der Ansprüche 6 bis 8, dadurch gekennzeichnet, daß die Zufuhrleitung für das Zusatzwasser in der Abdampfleitung (1) verlegt ist.

10. Vorrichtung nach Anspruch 9, dadurch gekennzeichnet, daß die Zufuhrleitung berippt ist.
